# EUROPEAN PATENT APPLICATION

(11) **EP 2 890 214 A1**
(43) Date of publication of application: **01.07.2015**
(21) Application number: 13382556.2
(22) Date of filing: 26.12.2013
(51) Int. Cl.: H04W 88/04

(54) **A method for providing wireless data connectivity between user computing devices in a given area and computing device**

(71) Applicant: Telefonica Digital España, S.L.U., 28013 Madrid (ES)
(72) Inventor: Navarro, Fernando, 28013 Madrid (ES); Yang, Xiaoyuan, 28013 Madrid (ES); Iha, Eduardo, 28013 Madrid (ES)
(74) Representative: Carlos Hernando, Borja

(57) **Abstract**

A method for providing wireless data connectivity between user computing devices in a given area and computing device

The method comprising: receiving, by a remote server, a message from each one of a plurality of user computing devices included in a given area, said message including information regarding each user computing device, sending, the remote server, based on said received message a response to each one of the plurality of user computing devices; adopting, by each user computing device, a specific state of operation comprising acting as an access point sharing its wireless data connectivity with another user computing device or alternatively acting as a client of another user computing device by means of using the wireless data connectivity provided by the latter; notifying, each user computing device, said adopted specific state of operation to the remote server; and providing said wireless data connectivity by one sharer computing device to a client computing device.

## Description

### Field of the invention

The present invention generally relates to mobile data connectivity. Particularly, present invention relates to a method for providing wireless data connectivity between user computing devices in a given area, and to a computing device.

### Background of the invention

Providing mobile data connectivity (3G/4G) in a given area is a challenging problem that requires detailed studies of signal propagation, careful planning and sizing of backbone networks, as well as, determining number, capacity and placement of cell towers. Mobile networks are costly to deploy and maintain. In most cases it involves installing fixed infrastructure that can handle a wide range of network loads. Under such circumstances, there is no design that minimizes fixed costs, maximizes peak performance while providing the lowest operational costs.

The bigger the differences in demand, the more intense the previous problem is. Extreme examples are crowds, demonstrations, sports and musical events where peak demand is very concentrated in time. Once these occurrences end, usage falls sharply. Similar patterns can be found in densely populated urban environments whose network demand is strongly correlated with its activity cycles [1, 2]. Both mobile and WiFi networks show these characteristics, with makes an optimal design unfeasible.

In general, the solutions to handle traffic in the backbone are simpler and cheaper to deploy than the ones used to resolve the aerial link between the mobile devices and cell towers. Ad-hoc mobile deployments can alleviate the strain by installing permanent infrastructure that can be dimensioned to handle maximum demand; or temporary devices that are removed and repurposed after servicing the event.

In both cases, possible approaches are reducing the size of each cell, so it can manage subsets of devices and split the demand (pico, microcells); divert part of the traffic to other types of networks (femtocells); or upgrading the towers to handle more individual mobile connections. There are also downsides associated to these solutions: cost, unexpected events that prevent any advanced planning.

Recent advances such as WifiDirect™ allow coordinating a small number of devices in a local area or neighborhood. They rely on a series of services that can determine the capabilities of a certain Access Point (AP) and network prior to establishing a connection.

WiFi infrastructure can also complement the 3G/4G network and support mobile networks with terrestrial ones. These approaches will work for many scenarios. However, as the numbers of clients grow, there are certain challenges that need to be addressed: access point and antenna design, cost and deployment, signal propagation, channel allocation, etc. Only recent advances allow solutions for extreme conditions such as the ones found in sports stadiums [3]. Nevertheless, providing WiFi coverage requires installing hundreds of access points (APs) and such projects are expensive to deploy and hard to maintain.

### References

[1] Utpal Kumar Paul, Anand Pravu Subramanian, Milind Madhav Buddhikot and Samir R. Das,"Understanding Traffic Dynamic in Cellular Data Networks", In the proceedings of IEEE INFOCOM 2011, http://www.wings.cs.sunysb.edu/~upaul/paper/Infocom11-final-version.pdf
[2] Usage Patterns in an Urban WiFi Network Mikhail Afanasyev, Tsuwei Chen, Geoffrey M. Voelker, and Alex C. Snoeren. IEEE/ACM Transactions on Networking (ToN) http://cseweb.ucsd.edu/~snoeren/papers/google-ton.pdf
[3] Cisco Connected Stadium Wi-Fi Solution. http://www.cisco.com/web/strategy/docs/sports/c78-675063-dSheet.pdf

### Summary of the Invention

To address the above-discussed deficiencies of the prior art, the present invention in accordance with a first aspect provides a method for providing wireless data connectivity, e.g. 3G and/or 4G connectivity, between user computing devices in a given area, e.g. an area with a high amount of connected user computing devices or high-density area, comprising: receiving, by a remote server, a message from each one of a plurality of user computing devices included in said given area, said message being sent upon a valid registration of each user computing device is performed in said remote server, and said message including information regarding each user computing device of the given area; and sending, the remote server, based on said received message a response to each one of the plurality of user computing devices of said given area.

The information included in the message at least comprises information regarding the user computing device wireless capabilities, a unique id associated with the user computing device data contract, a list including other user computing devices in said given area and a status about said user computing device wireless capabilities.

On contrary of the known proposals, the method of the first aspect further comprises: adopting, by each user computing device of the given area, upon receiving said response, a specific state of operation that indicates if said user computing device acts as an access point sharing its wireless data connectivity with at least another user computing device of the given area or that alternatively indicates if the user computer device acts as a client of at least another user computing device of the given area by means of using the wireless data connectivity provided by the latter. Moreover, in the method, each user computing device of the given area, notifies its adopted specific state of operation to the remote server. Finally, said wireless data connectivity is provided by at least one user computing device acting as an access point or sharer to at least one user computing device acting as a client.

In an embodiment, the information included in the message may further include information about preferences of the user computing device. This further information can comprise any of the following information or data for instance data usage of the computing device, data cap and mobile data plan contracted, energy profile of the computing device, battery level and/or estimated energy consumption of the same.

Preferably, that information to be included in the message will be periodically updated by each user computing device of the given area. Besides, every time a user computing device decides to change the adopted specific state of operation it will notify it to the remote server, so that the remote server can have updated and real information of each of the computing devices.

The sharer in general will track, and keep updated, the amount of traffic generated by the at least one client using the provided wireless connectivity. In consequence, the sharer can send this tracked amount of traffic to the remote server and the latter, in case the received traffic amount being over that a certain threshold and/or several times bigger than an amount of traffic generated any other computing devices in the given area could force a change in the provided wireless data connectivity.

In an embodiment, the providing of the wireless connectivity is performed upon a credentials exchange, generated by the remote server, is done between the at least one sharer and the at least one client in order to said provided connectivity being secure.

In accordance with a second aspect there is provided a computing device, comprising: registration means for registering in a remote server; transmission means for sending a message to said remote server, said message at least including information regarding the computing device wireless capabilities, a unique id associated with the computing device data contract, a list including others computing devices in a given area and a status about said computing device wireless capabilities, said included information being provided by software means running in the compute device; and reception means for receiving a response from the remote server based on said message sent.

In addition, the computing device of the second aspect on contrary of the known proposals further includes: deciding means for adopting, upon receiving said response, a specific state of operation, said specific state of operation at least comprising: acting as an access point sharing its wireless data connectivity with at least another user computing device of the given area, or acting as a client of at least another user computing device of the given area by means of using the wireless data connectivity provided by the latter; and said transmission means further notifying said adopted specific state of operation to the remote server.

The computing device of the second aspect at least comprises a mobile phone, a smartphone, a tablet PC, a laptop or a PDA.

The subject matter described herein can be implemented in software in combination with hardware and/or firmware, or a suitable combination of them. For example, the subject matter described herein can be implemented in software executed by a processor.

According to another aspect, a computer program product is provided including one or more sequences of one or more instructions which, when executed by one or more processors, cause a computing device to at least perform the following, register in a remote server; send a message to said remote server including information regarding said computing device wireless capabilities, a unique id associated with the computing device data contract, a list including others computing devices in a given area and a status about said computing device wireless capabilities; adopting a specific state of operation including the computing device acting as an access point sharing its wireless data connectivity with at least another user computing device of a given area, or acting as a client of at least another user computing device of the given area by means of using the wireless data connectivity provided by the latter; and notifying the adopted specific state of operation to the remote server.

Present invention provides Internet connectivity at a lower cost and can provide similar service at a much lower cost. In case the provider is a TELCO, the network does not need to be updated. It can also cover over-the-top services.

Computing devices acting as sharers or access points (APs) are created and assigned dynamically allowing reacting to changes in the density, topology, placement or network conditions. Moreover, connectivity is solved locally, so design is not so sensitive to RF interference, lack of channels available, etc.

### Brief Description of the Drawings

The previous and other advantages and features will be more fully understood from the following detailed description of embodiments, with reference to the attached, which must be considered in an illustrative and non-limiting manner, in which:
Fig. 1 is an example of a scenario or area where the present invention can be implemented.
Fig. 2 illustrates the data workflow executed by the proposed method to provide wireless data connectivity between user computing devices in said area or scenario.
Fig. 3 illustrates the workflow executed by each computing device in said area to determine its operation mode.

### Detailed Description of Several Embodiments

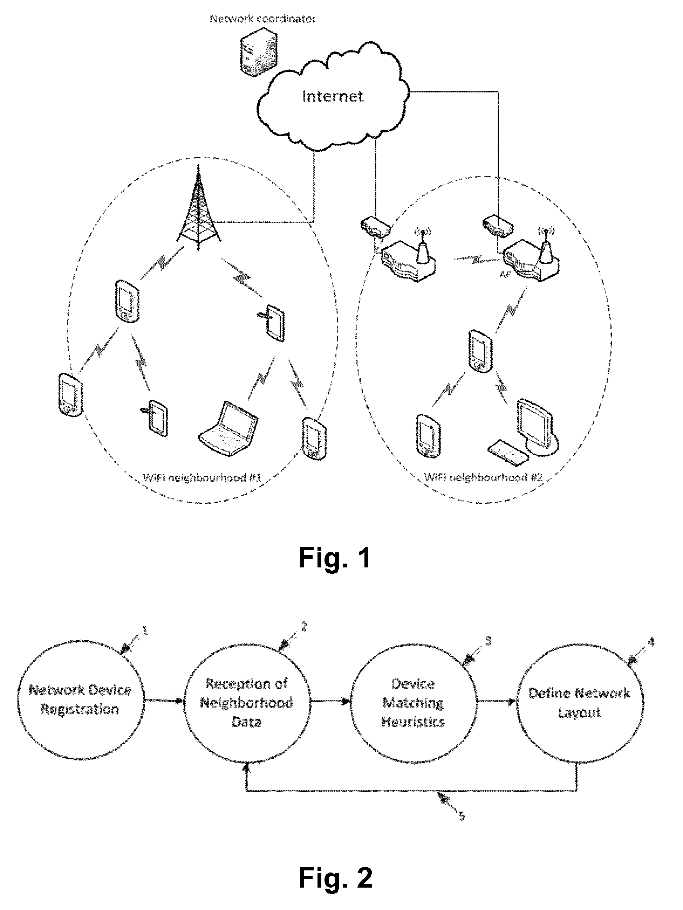

Fig. 1 illustrates a possible scenario where the proposed method for providing wireless data connectivity, including a 3G and/or 4G connectivity, between user computing devices in a given area, preferably a high-density area, can be implemented. Under normal circumstances, a user computing device is associated to a data plan that provides 3G/4G connectivity through a cell tower. With current technologies, the performance bottleneck and technical feasibility is the aerial link.

Therefore, present invention relies on breaking this association by splitting user computing devices into two different groups. The first ones or sharers connect to the cell tower via 3G/4G connectivity and act as WiFi access points actively sharing its connectivity with other user computing devices. These user computing devices can also act as clients by themselves, that is, their users may be accessing the Internet. The second group contains user computing devices that act as pure WiFi clients, that is, instead of relying on a 3G/4G link, they will access the Internet using the connectivity provided by the sharers.

The hardware in the computing devices does not need to be altered; however, the provided solution requires a software application/service to be installed therein. This application takes care of scanning the area or environment, gathering data, sending it to a remote server or network coordinator, activating the right sharing modes and ensuring that the required changes in the layout of the network are effectively applied. While chipsets supporting standards such as WiFiDirect™ already provide Internet sharing, standard software and hardware stacks lack the capability to coordinate a network more complex than a few computing devices.

Cell towers do not need to be modified in any way. They act as IP connectivity providers and present invention is agnostic of the low level details required to negotiate or establish a connection. Voice calls will be handled as usual. The proposed method preferably is designed to handle situations where traffic due to data connections is more intense than the one generated by traditional voice calls.

Each computing device is required temporarily connect to the 3G/4G network and open a connection to the network coordinator. The network coordinator is an entity that can keep track of the most basic data associated to each computing device in the network. Each computing device is required to register in the network coordinator by sending a message with a description of itself.

In reference to Fig. 2 it is illustrated the data workflow executed by the proposed method. Upon joining the network, each user computing device registers itself (1) in the remote server or network coordinator using any type of Internet connection (3G, WiFi, etc.). So, after a successful authentication into the network coordinator, each user computing device will send a message whose payload preferably will contain: The device capabilities (i.e. 3G/4G/WiFi), speed of each connection method, Unique id associated with its data contract (phone number, IMEI, etc.), a list containing the computing devices in its WiFi area or neighbourhood, a status of the 3G/4G connection (i.e. is it available?, signal level, etc.).

Moreover, optionally, each computing device may also indicate in said message information on the preferences respect to the data usage, data cap of its mobile data plan, energy profile, battery level, and/or estimated energy consumption in 3G/4G/WiFi mode, etc.

Preferably, this information is periodically updated to react to changes in the state of different network components.

Upon successful registration, the network coordinator will compose and return a message containing the information of each computing device within the computer device's WiFi coverage (2). As a result, each computing device will know the capabilities of its immediate neighbourhood. Preferably, each computing device will receive a response containing a list of the capabilities of each device within WiFi coverage. The computing device registration is the equivalent of a declaration of intentions, that is, any computing device that registers is explicitly stating that it wants to access the Internet and, optionally, share its connectivity with others. Hence, computing device that are not registered will never be included in the list, so they will be automatically ignored by its neighbourhood, independently of whether there are accessible via WiFi or not.

Each computing device will determine the most suitable way to access the Internet using this information. Based on a series of heuristics (3), the outcome may (4) indicate that the computing device will continue using its 3G/4G connectivity and use it independently of its neighbourhood that is no network sharing will take place. On another hand, it can indicate that the computing device continues using its 3G/4G connectivity and share it with its neighbourhood. In this case, the computing device becomes an active access point. Furthermore, it can also indicate that the computing device will access the Internet through a sharer already operating as WiFi AP. This may involve using a different connection than has been used to register the computing device.

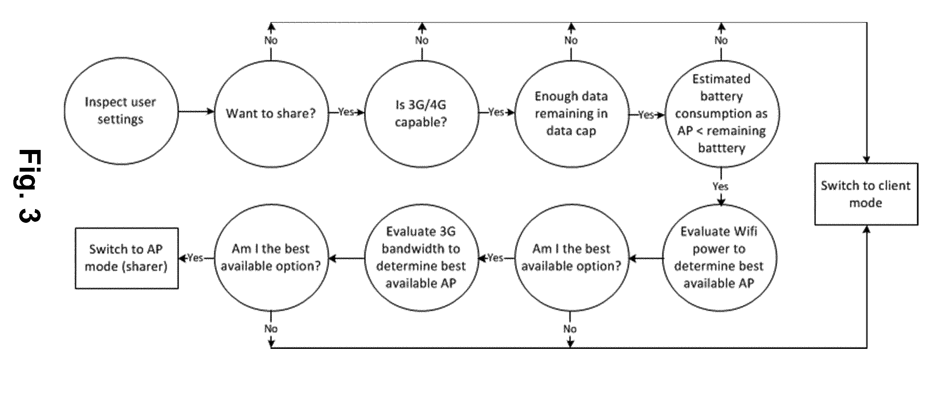

Fig. 3 shows the workflow that is executed to determine the operation mode each computing device will switch to.

Using the information available, each computing device decides the state it will be operating and notifies it to the network coordinator. In an embodiment, in order to ensure all traffic is secure, the network coordinator can generate a set of credentials that will be sent to the client and sharer. These credentials are used to negotiate a secure connection between client and sharer. By default, individual credentials expire after a certain period of time.

However, according to an embodiment, in case a computing device acting as a client misbehaves (i.e. illegal attempt to use the network, try to take control of another computing device, etc.) the relation between sharer and client can be cancelled by revoking the corresponding credentials. In order to identify rogue computing devices, each computing device acting as a sharer contains logic to track the amount of connections and traffic generated by a client. This is used to determine when a client is generating a suspicious amount of activity, maybe as a result of a denial of service attack. The same may apply for computing devices that try to gain access to the sharer itself. The methods used to profile and establish such behaviors are out of the scope of this patent.

Network layout preferably is re-evaluated periodically to adapt to changes in load and/or demand, explicit requests of one of the clients/sharers, due to periodic updates generated by the network coordinator, user settings, performance problems, battery drain, etc. In some cases, the user may decide to stop sharing its connectivity, which will be notified to the network coordinator and will generate a re-evaluation of the network connectivity.

Any requests originated in a client/sharer will progress to the network coordinator, which will send a complete set of updated data to all participants that are part of the WiFi neighbourhood of the originating computing device. Once received, the same heuristics are used to determine which sharer is available, whether a client will become a new sharer, which computing devices need to disappear from the neighbourhood, etc. In general, certain updates are notified as soon as they happen, for example, when a computing device that acts as sharer is no longer available. In some other cases, the retransmission of status notifications affecting several computing devices can be aggregated, queued and transferred together, when there are enough of them or when a certain time range has elapsed.

Each computing device is associated with a contract and data plan that allows downloading/uploading a certain amount of data. Each plan has its own pricing and strategy and the invention tries to cover the most common terms of such plans. In some cases, exhausting the data cap produces a disconnection from the service, while in others, the consequence is incurring in extra charges. These are the main reasons why present invention also accounts the differences of each plan. Each user can configure its computing device to reflect both the particularities of its data plan (e.g. quota available) and their personal preferences (e.g. whether they decide to share only a portion of its quota).

Services that integrate into the backend of the TELCO/ISP can take advantage of accounting facilities that will not be available for an over the top (OTT) service. In general, several cases can be considered, associated with alternative business models.

The solution can be fully integrated with the billing system of the TELCO/ISP. In this case, each computing device can keep track of the traffic originated by the computing device itself, and the computing devices that are routing their traffic through the computing device. Computing devices are responsible for the identification and accounting of the traffic associated with each computing device connected to him. This is possible because each client identifies itself at the time of the registration by sending its IMEI/individual ID, so, from that moment, data consumption and identity can be tracked until the relation between client and sharer is lost.

Each computing device sends periodic reports to the backend and billing systems of the TELCO, which will consolidate and keep updated status of the data consumption of each customer.

On another hand, if an OTT solution does not have access to the billing or traffic accounting systems of the TELCO it is impossible to build a consolidated report for each user/customer. Under these circumstances, the computing device connected to the 3G/4G cell tower will seem to generate the traffic originated by the user owning the computing device and any other users taking advantage of the functionality of the computing device as a sharer. As a result, the TELCO will invoice the sharer. This situation is exacerbated when there are several levels of sharers (sharers connected to sharers), chained to a number of clients at each level. Except for customers with unlimited data plans, this is clearly an unattractive option, so two alternatives are proposed. First, the method can rely on a balance of traffic generated as a client and routed as a sharer; second, it can build a "virtual credit" that can be exchanged by other services, data to be used on an existing network of access points, etc.

In accordance to said first alternative, sharers are responsible for accounting the traffic generated by any clients directly connected to him. For example, a sharer (A) will keep updated track of the traffic generated by each client directly connected to him, excluding the traffic traversing the network from any clients operating through secondary sharers (B). (A) and (B) are sharers that are connected directly or through other sharers. This data is transmitted to and consolidated by the network coordinator. The network coordinator will signal and force a layout change after, for example, any clients whose traffic generated is X times bigger than the traffic consumed by others or when an absolute value is reached.

In accordance to said second alternative and in the same way as with the first option, data accounting is kept updated by each sharer. The main difference relies on the fact that equilibrium is not built from a balance of transferred and generated data, but based on the conversion of the data balance to a virtual credit. That is, computing devices sharing more data from its data plan than consume from others build a balance in the positive. This credit can be potentially used to buy other services or converted into real currency. The amount of virtual currency each Megabyte (MB) generates or costs can depend on different aspects such as, but not limited to: real value of this MB according to the data plan of the customer; demand for data at the moment it is consumed; difficulty to provide that data; amount of battery consumed in the operation; in general, any metric that can put a value to a scarce good. The computing devices that consume more data than they share will incur in debt that can only be cancelled by acting as sharers or paying for the service with real currency.

The scope of the present invention is defined in the following set of claims.

## Claims

1. A method for providing wireless data connectivity between user computing devices in a given area, comprising:
- receiving, by a remote server, a message from each one of a plurality of user computing devices included in said given area, said message being sent upon a valid registration of each user computing device is performed in said remote server, and said message including information regarding each user computing device of the given area, said included information at least comprising information regarding the user computing device wireless capabilities, a unique id associated with the user computing device data contract, a list including other user computing devices in said given area and a status about said user computing device wireless capabilities; and
- sending, the remote server, based on said received message a response to each one of the plurality of user computing devices of said given area,
wherein the method is **characterized in that** it further comprises:
- adopting, by each user computing device of the given area, upon receiving said response, a specific state of operation, said specific state of operation at least comprising acting as an access point sharing its wireless data connectivity with at least another user computing device of the given area or alternatively acting as a client of at least another user computing device of the given area by means of using the wireless data connectivity provided by the latter;
- notifying, each user computing device of the given area, said adopted specific state of operation to the remote server; and
- providing said wireless data connectivity by at least one user computing device acting as an access point or sharer to at least one user computing device acting as a client.

2. The method of claim 1, wherein said included information further comprises information about preferences of the user computing device including at least one of data usage, data cap and a mobile data plan contracted, an energy profile, battery level and estimated energy consumption.

3. The method of previous claims, wherein said information is periodically updated by each user computing device of the given area.

4. The method of claim 1, wherein said notifying being performed every time a user computing device of the given area decides to change said adopted specific state of operation.

5. The method of claim 1, wherein said at least one sharer tracks an amount of traffic generated by said at least one client using said provided wireless connectivity.

6. The method of claim 5, wherein said tracked amount of traffic is kept updated in the at least one sharer.

7. The method of claim 5, further comprising:
- receiving, the remote server, said tracked amount of traffic from the at least one sharer; and
- forcing, the remote server, a change in said provided wireless data connectivity based on said received tracked amount of traffic including a received traffic amount over that a certain threshold, and/or several times bigger than an amount of traffic generated by others computing devices in the given area.

8. The method of claim 1, wherein said providing is performed upon a credentials exchange, generated by the remote server, is done between the at least one sharer and the at least one client in order to provide a secure connectivity.

9. The method of claim 1, wherein said list including other user computing devices in said given area only comprises computing devices registered in the remote server.

10. The method of previous claims, wherein said given area is an area comprising a high amount of connected user computing devices or high-density area.

11. The method of previous claims, wherein said wireless data connectivity comprises 3G and/or 4G connectivity.

12. A computing device, comprising:
- registration means for registering in a remote server;
- transmission means for sending a message to said remote server, said message at least including information regarding the computing device wireless capabilities, a unique id associated with the computing device data contract, a list including others computing devices in a given area and a status about said computing device wireless capabilities, wherein said included information being provided by software means running in the computing device; and
- reception means for receiving a response from the remote server based on said message sent,
wherein said computing device is **characterized in that** it further comprises:
- deciding means for adopting, upon receiving said response, a specific state of operation, said specific state of operation at least comprising:
acting as an access point sharing its wireless data connectivity with at least another user computing device of the given area, or
acting as a client of at least another user computing device of the given area by means of using the wireless data connectivity provided by the latter; and
- said transmission means further notifying said adopted specific state of operation to the remote server.

13. The computing device of claim 12, wherein said computing device at least comprises a mobile phone, a smartphone, a tablet PC, a laptop or a PDA.

14. The computing device of claim 12, wherein said wireless data connectivity comprises 3G and/or 4G connectivity.

15. A computer program product including one or more sequences of one or more instructions which, when executed by one or more processors, cause a computing device to at least perform the following, register in a remote server; send a message to said remote server including information regarding said computing device wireless capabilities, a unique id associated with the computing device data contract, a list including others computing devices in a given area and a status about said computing device wireless capabilities; adopting a specific state of operation including acting as an access point sharing its wireless data connectivity with at least another user computing device of a given area, or acting as a client of at least another user computing device of the given area by means of using the wireless data connectivity provided by the latter; and notifying the adopted specific state of operation to the remote server.
